# EUROPEAN PATENT SPECIFICATION

(11) **EP 3 733 463 B1**
(45) Date of publication and mention of the grant of the patent: **22.11.2023**
(21) Application number: 18897749.0
(22) Date of filing: 01.08.2018
(51) Int. Cl.: B60S 3/04, F16K 3/24

(54) **SPRAY GUN AND CAR WASHING MACHINE PROVIDED WITH SAME**
SPRITZPISTOLE UND AUTOWASCHMASCHINE DAMIT
PISTOLET DE PULVÉRISATION ET MACHINE DE LAVAGE DE VOITURE POURVUE DE CELUI-CI

(30) Priority: 28.12.2017 CN 201711498450
(43) Date of publication of application: 04.11.2020
(73) Proprietor: Zhuhai Gree Intelligent Equipment Co., Ltd, Zhuhai, Guangdong 519070 (CN); Gree Electric Appliances, Inc. of Zhuhai, Zhuhai, Guangdong 519070 (CN)
(72) Inventor: HUANG, Jiafeng, Zhuhai, Guangdong 519070 (CN); HUANG, Qianze, Zhuhai, Guangdong 519070 (CN)
(74) Representative: V.O.
(86) International application number: PCT/CN2018/097969
(87) International publication number: WO 2019/128224

(56) References cited:
- WO-A1-96/00130
- CN-A- 102 371 975
- CN-A- 108 128 281
- CN-A- 108 128 282
- CN-B- 103 406 224
- CN-U- 204 107 718
- CN-U- 204 279 370
- CN-U- 207 809 342
- CN-U- 207 809 346
- GB-A- 726 778
- JP-A- H07 171 447
- US-A- 4 709 859
- US-A1- 2007 228 190
- US-A1- 2015 102 121

## Description

### Technical Field

The disclosure relates to a field of vehicle maintenance, in particular to a spray gun and a car washer with the spray gun.

### Background

Inventors know that, a car washer is a machine using a computer to control a brush and high-pressure water to clean cars. The car washer is mainly composed of a control system, a circuit, an air passage, a water passage and a mechanical structure. The car washer has the characteristics of simple operation, elegant appearance, and small damage to car paint. In recent years, the car washer has been widely used in the automobile service industry. See for example US2015/102121.

With an improvement of international energy conservation and environmental protection mechanism and awareness, the way of using high-pressure water to wash car causes massive wastewater pollution and has other disadvantages; steam car washer just solves those problems, and steam car washer will become a new trend of development.

The main concept of steam car washer is that: first of all, the steam thoroughly cleans all parts of the car; and most importantly, steam car washer is not just a process of using high-pressure cold water to wash, but through the drying property of the steam, every small part of the car is thoroughly cleaned, sterilized, disinfected and deodorized at right pressure and temperature, so that a better car washing cleanliness is achieved. To improve simple cleaning to fine cleaning is closely related to a car owner's health.

However, the spray gun of the car washer in the art known to inventors does not ensure a sealing effect between a gas outlet pipe and a gas inlet pipe, and then the normal operation of the spray gun does not be ensured.

In addition, when a connecting rod and a handle of the spray gun of the car washer known to inventors are in a naturally stress-free state, the handle does not be locked effectively, and just pressing the handle will make the spray gun work, so if a person who is not familiar with the spray gun holds the spray gun, a misoperation will occur, which affects the safety of operators. Therefore, the safety performance of the spray gun known to inventors is low, and it is easy to cause danger.

### Summary

The invention is defined by the appended set of claims.

Some embodiments of the disclosure provide a spray gun and a car washer with the spray gun, solve a problem of low safety performance of the spray gun known to inventors.

An embodiment of the present disclosure provides a spray gun, which includes a spray gun housing and an operating handle. The operating handle is provided on the spray gun housing to control connection and disconnection of a fluid in the spray gun by pulling the operating handle. The spray gun further includes: a spray gun main body; a sealing assembly, at least a part of the sealing assembly being movably provided in the spray gun main body of the spray gun to control the connection and disconnection of a fluid in the spray gun main body, and the operating handle being connected with the sealing assembly, so as to drive the sealing assembly to move by pulling the operating handle, so that the connection and disconnection of the fluid in the spray gun main body is controlled; and a locking switch, mounted on the spray gun housing in a position-adjustable manner, the locking switch being located on one side of the operating handle and cooperating with the operating handle in a limiting manner, so as to prevent the operating handle from being pulled when the spray gun is in a non-operating state. The sealing assembly includes a partition flange used for cutting off a fluid passage in the spray gun main body and an elastic member connected with the partition flange; and the elastic member is provided in a retractable way to press the partition flange to a position for that cuts off the fluid passage of the spray gun main body.

In an exemplary embodiment, the spray gun further includes: a connecting rod. One end of the connecting rod is connected with the sealing assembly, and the other end of the connecting rod is connected with the operating handle, so that the operating handle drives, through the connecting rod, the sealing assembly to move.

In an exemplary embodiment, the locking switch is provided with a locking portion. The locking switch is movably provided along a direction close to or away from the operating handle, so that the locking portion is abutted against the operating handle, or the locking portion avoids the operating handle to make the operating handle move.

In an exemplary embodiment, the locking switch is provided with a locking position used for limiting the operating handle and an avoiding position used for avoiding the operating handle. The locking switch is movably provided between the locking position and the avoiding position. The spray gun further includes a cushion block. The cushion block is mounted on the spray gun housing. When the locking switching is located at the locking position, the cushion block is located on a side, far away from the operating handle, of the locking portion and is abutted against the locking portion, so as to lock the locking switch at the locking position.

In an exemplary embodiment, the spray gun further includes a gas inlet pipe and a gas outlet pipe. Both the gas inlet pipe and the gas outlet pipe are mounted on the spray gun main body. A gas inlet passage used for being in communication with a pipe cavity of the gas inlet pipe and a gas outlet passage used for being in communication with a pipe cavity of the gas outlet pipe are provided on the spray gun main body. At least a part of the sealing assembly is movably provided between the gas inlet passage and the gas outlet passage, so as to cut off the gas inlet passage and the gas outlet passage, or communicate the gas inlet passage and the gas outlet passage.

In an exemplary embodiment, a partition passage is provided on the spray gun main body. The partition passage is located between the gas inlet passage and the gas outlet passage. The partition passage is in communication with both the gas inlet passage and the gas outlet passage. The partition flange is provided in the partition passage in a position-adjustable manner, so as to cut off the gas inlet passage and the gas outlet passage.

In an exemplary embodiment, the partition passage is a stepped hole including a first hole section and a second hole section. The first hole section is in communication with the gas outlet passage, the second hole section is in communication with the gas inlet passage, and the partition passage is occluded at a joint between the first hole section and the second hole section.

In an exemplary embodiment, the sealing assembly further includes a sealing base. One end of the elastic member is abutted against the sealing base, and the other end of the elastic member is abutted against the partition flange.

In an exemplary embodiment, the spray gun further includes an ejector pin. The ejector pin is connected with the partition flange, so that the partition flange is pushed to move through the ejector pin.

Another embodiment of the present disclosure provides a car washer, which includes a steam generator and the spray gun abovementioned, wherein the spray gun is connected with the steam generator.

The spray gun in some embodiments of the disclosure includes the spray gun housing, the operating handle, and the locking switch. The operating handle is provided on the spray gun housing to control the connection and disconnection of the fluid of the spray gun by pulling the operating handle. The locking switch is mounted on the spray gun housing in a position-adjustable manner, and the locking switch is located on one side of the operating handle and cooperated with the operating handle in a limiting manner. In this way, when the spray gun is in the non-operating state, the operating handle is prevented from being pulled, to prevent a user from pulling the operating handle due to a misoperation, thereby preventing the damage of the spray gun to the user, and solving the problem of low safety performance of the spray gun known to inventors.

### Brief Description of the Drawings

The accompanying drawings constituting a part of the application are used for providing further understanding of the disclosure. Schematic embodiments of the disclosure and description thereof are used for illustrating the disclosure and not intended to form an improper limit to the disclosure. In the accompanying drawings:
Fig. 1 illustrates a structure diagram of an embodiment of a spray gun according to the disclosure;
Fig. 2 illustrates a front view of the embodiment of the spray gun in Fig. 1; and
Fig. 3 illustrates an assembly drawing of a sealing assembly and a spray gun main body of the spray gun in Fig. 1.

The above accompanying drawings include the following reference numbers:
10. spray gun housing; 20. operating handle; 30. locking switch; 31. locking portion; 311. pressing part; 40. spray gun main body; 50. sealing assembly; 51. ejector rod; 60. connecting rod; 70. cushion block;
110. gas inlet pipe; 120. gas outlet pipe; 41. gas inlet passage; 42. gas outlet passage; 43. partition passage; 431. first hole section; 432. second hole section; 140. sealing ejector block; 141. partition flange; 150. elastic member; 160. sealing base; 170. first sealing ring; 180. ejector pin; 190. mounting base; 191. second sealing ring; 192. pressing block; 193. ejector block.

### Detailed Description of the Embodiments

It is to be noted that the embodiments in the application and the characteristics in the embodiments are combined under the condition of no conflicts. The disclosure is elaborated below with reference to the accompanying drawings and embodiments.

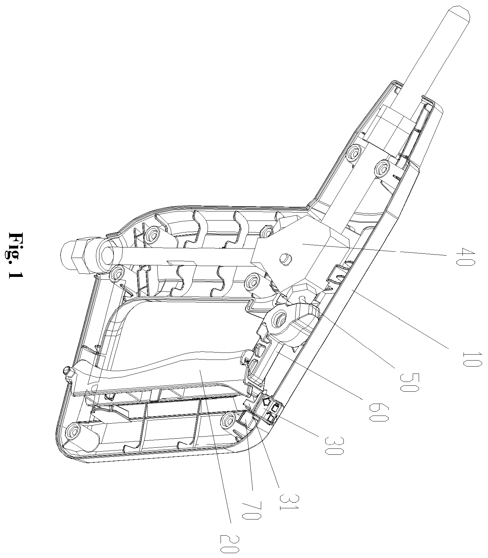

The disclosure provides a spray gun housing, which includes a spray gun housing 10 and an operating handle 20. Referring to Fig. 1 to Fig. 3, the operating handle 20 is provided on the spray gun housing 10 to control connection and disconnection of a fluid of the spray gun by pulling the operating handle 20. The spray gun further includes: a locking switch 30. The locking switch 30 is mounted on the spray gun housing 10 in a position-adjustable manner, and the locking switch 30 is located on one side of the operating handle 20 and cooperates with the operating handle 20 in a limiting manner, so as to prevent the operating handle 20 from being pulled when the spray gun is in a non-operating state.

The spray gun in the disclosure includes the spray gun housing 10, the operating handle 20, and the locking switch 30. The operating handle 20 is provided on the spray gun housing 10 to control the connection and disconnection of the fluid of the spray gun by pulling the operating handle 20. The locking switch 30 is mounted on the spray gun housing 10 in a position-adjustable manner, and the locking switch 30 is located on one side of the operating handle 20 and cooperates with the operating handle 20 in a limiting manner. In this way, when the spray gun is in the non-operating state, the operating handle 20 is prevented from being pulled, to prevent a user from pulling the operating handle 20 due to a misoperation, thereby preventing a damage of the spray gun to the user, and solving a problem of low safety performance of the spray gun known to inventors.

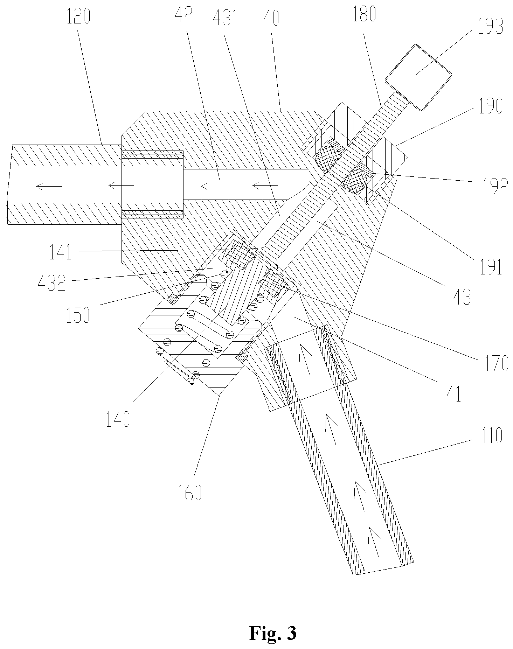

The spray gun in the disclosure includes a gas inlet pipe 110 and a gas outlet pipe 120. Referring to Fig. 3, the spray gun further includes: a spray gun main body 40, both the gas inlet pipe 110 and the gas outlet pipe 120 being mounted on the spray gun main body 40, and a gas inlet passage 41 used for being in communicating with a pipe cavity of the gas inlet pipe 110 and a gas outlet passage 42 used for communicating with a pipe cavity of the gas outlet pipe 120 being provided on the spray gun main body 40; and a sealing assembly, at least a part of the sealing assembly being movably provided between the gas inlet passage 41 and the gas outlet passage 42, so as to cut off the gas inlet passage 41 and the gas outlet passage 42 or communicate the gas inlet passage 41 with the gas outlet passage 42. The sealing assembly includes a partition flange 141 used for cutting off the gas inlet passage 41 and the gas outlet passage 42 and an elastic member 150 connected with the partition flange 141. The elastic member 150 is provided in a retractable way to press the partition flange 141 to a position that cutting off the gas inlet passage 41 and the gas outlet passage 42.

The spray gun in the disclosure includes the gas inlet pipe 110, the gas outlet pipe 120, and the spray gun main body 40. Both the gas inlet pipe 110 and the gas outlet pipe 120 are mounted on the spray gun main body 40. The gas inlet passage 41 used for being in communication with the pipe cavity of the gas inlet pipe 110 and the gas outlet passage 42 used for being in communication with the pipe cavity of the gas outlet pipe 120 are provided on the spray gun main body 40. The spray gun further includes the sealing assembly. At least a part of the sealing assembly is movably provided between the gas inlet passage 41 and the gas outlet passage 42, so as to cut off the gas inlet passage and the gas outlet passage, or communicate the gas inlet passage and the gas outlet passage. To communicate or uncommunicate the gas inlet passage 41 and the gas outlet passage 42 fluidly, the sealing assembly includes the partition flange 141 for cutting off the gas inlet passage 41 and the gas outlet passage 42 and the elastic member 150 connected with the partition flange 141. By providing the elastic member 150 in a retractable way, the partition flange 141 is pressed, under the action of the elastic member 150, at a position that cuts off the gas inlet passage 41 and the gas outlet passage 42, thereby the gas inlet passage 41 and the gas outlet passage 42 are not communicated fluidly; and only when acted upon by an external force, the partition flange 141 overcomes the action of the elastic member 150 to communicate the gas inlet passage 41 and the gas outlet passage 42; in this way, the sealing effect of the spray gun main body 40 is enhanced, and the problem that the sealing effect between the gas outlet pipe and the gas inlet pipe of the spray gun of the car washer known to inventors cannot be ensured is solved.

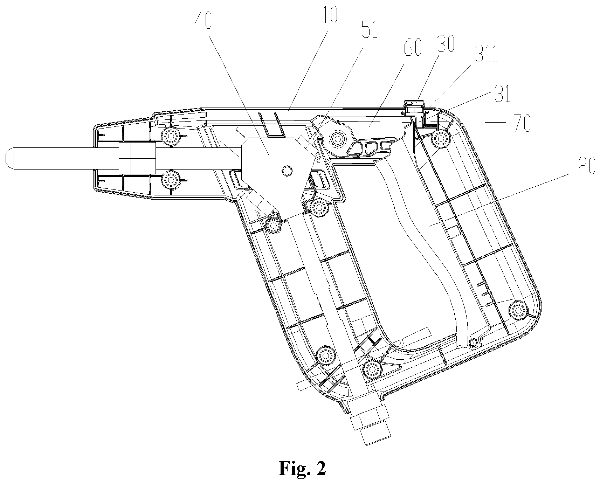

The main structure of the spray gun in the present embodiment is as follows. As shown in Fig. 1 and Fig. 2, the spray gun further includes: the spray gun main body 40, the spray gun main body 40 being provided in the spray gun housing 10; and the sealing assembly 50, at least a part of the sealing assembly 50 is movably provided in the spray gun main body 40, to control the connection and disconnection of the fluid in the spray gun main body 40. The operating handle 20 is connected with the sealing assembly 50 to drive the sealing assembly 50 to move by pulling the operating handle 20, so as to control the connection and disconnection of the fluid in the spray gun main body 40.

It can be seen that the connection and disconnection of the fluid in the spray gun main body 40 is controlled conveniently by pulling the operating handle 20, and then the opening or closing of the spray gun is controlled conveniently.

To implement the connection between the operating handle 20 and the sealing assembly 50, as shown in Fig. 1 and Fig. 2, the spray gun further includes: a connecting rod 60. One end of the connecting rod 60 is connected with the sealing assembly 50, and the other end of the connecting rod 60 is connected to the operating handle 20, so that the operating handle 20 drives, through the connecting rod 60, the sealing assembly 50 to move.

The specific form of the sealing assembly 50 in the present embodiment is as follows: the sealing assembly 50 includes an ejector rod 51 and a sealing part connected with the ejector rod 51; the sealing part is provided in the fluid passage of the spray gun main body 40 to control the connection and disconnection of the fluid passage; and the connecting rod 60 is connected with the ejector rod 51 to drive the ejector rod 51 to move. In this way, by making the ejector rod 51 to move, the connection and disconnection of the fluid in the spray gun main body 40 is controlled conveniently.

In the present embodiment, the locking switch 30 is at a side, far away from the sealing assembly 50, of the operating handle 20. In this way, the operating handle 20 is locked conveniently, to prevent the operating handle 20 from moving when the spray gun is in the non-operating state.

To lock the operating handle 20, as shown in Fig. 1 and Fig. 2, the locking switch 30 has a locking portion 31; the locking switch 30 is movably provided along a direction close to or away from the operating handle 20, so that the locking portion 31 is abutted against the operating handle 20, or the locking portion 31 avoids the operating handle 20 to make the operating handle 20 move.

In an exemplary embodiment, the locking switch 30 has a locking position used for limiting the operating handle 20 and an avoiding position used for avoiding the operating handle 20. The locking switch 30 is movably provided between the locking position and the avoiding position. The spray gun further includes a cushion block 70. The cushion block 70 is mounted on the spray gun housing 10. When the locking switching 30 is located at the locking position, the cushion block 70 is located on a side, far away from the operating handle 20, of the locking portion 31 and is abutted against the locking portion 31, so as to lock the locking switch 30 at the locking position.

To limit the locking switch 30, as shown in Fig. 1 and Fig. 2, the cushion block 70 is located between a locking position and an avoiding position of the locking switch 30. The cushion block 70 is an elastic member, so that the locking switch 30 compresses the cushion block 70 to pass through the cushion block 70 when moving between the locking position and the avoiding position of the locking switch 30.

In some embodiments, the cushion block 70 is a rubber block.

To compress the cushion block 70 to move to the avoiding position after passing through the cushion block 70, a pressing part 311 is provided on the locking portion 31. When the locking switch 30 is located at the locking position, the pressing part 311 is pressed on the cushion block 70; when the locking switch 30 moves towards the avoiding position, the pressing part 311 compresses the cushion block 70 so as to make it shrink.

In an exemplary embodiment, an operating head is provided on the locking switch 30.

The main structure of the spray gun main body 40 is as follows.

To communicate or uncommunicate the gas inlet passage 41 and the gas outlet passage 42, as shown in Fig. 3, a partition passage 43 is provided on the spray gun main body 40. The partition passage 43 is located between the gas inlet passage 41 and the gas outlet passage 42. The partition passage 43 is in communication with both the gas inlet passage 41 and the gas outlet passage 42. The partition flange 141 is provided in the partition passage 43 in a position-adjustable manner, so as to uncommunicate the gas inlet passage 41 and the gas outlet passage 42.

As shown in Fig. 3, the specific structure of the partition passage 43 in the disclosure is that: the partition passage 43 is a stepped hole including a first hole section 431 and a second hole section 432; the first hole section 431 is in communication with the gas outlet passage 42; the second hole section 432 is in communication with the gas inlet passage 41; and the partition passage 43 is occluded at a joint between the first hole section 431 and the second hole section 432.

To fix the whole sealing assembly, the sealing assembly further includes a sealing base 160. One end of the elastic member 150 is abutted against the sealing base 160, and the other end of the elastic member 150 is abutted against the partition flange 141.

In some embodiments, the sealing base 160 is a sealing nut.

To facilitate the sealing of the partition passage, as shown in Fig. 3, the sealing assembly further includes a sealing ejector block 140. The partition flange 141 is provided on the sealing ejector block 140, and the elastic member 150 is provided on the sealing ejector block 140 in a sleeving manner.

In an exemplary embodiment, the elastic member 150 is a spring. The sealing ejector block 140 has a rod body portion, and the spring is provided on the rod body portion in a sleeving manner.

In some embodiments, the sealing assembly further includes a first sealing ring 170. The first sealing ring 170 is mounted on the partition flange 141, so as to enhance a partition effect between the gas outlet passage 42 and the gas inlet passage 41. By setting the first sealing ring 170, the sealing effect of the sealing assembly is enhanced, thereby ensuring the partition effect between the gas outlet passage 42 and the gas inlet passage 41.

To push the partition flange 141 to connect the gas outlet passage 42 and the gas inlet passage 41, as shown in Fig. 3, the spray gun further includes an ejector pin 180. The ejector pin 180 is connected to the partition flange 141, so that the partition flange 141 is pushed by the ejector pin 180 to move.

To locate the ejector pin 180, as shown in Fig. 3, the spray gun further includes a mounting base 190. The mounting base 190 is provided on the ejector pin 180 in a sleeving manner and connected with the spray gun main body 40, so that the ejector pin 180 is mounted on the spray gun main body 40 through the mounting base 190.

In an exemplary embodiment, the ejector pin 180 is in threaded connection with the mounting base 190 to make the ejector pin 180 stretch and retract toward the partition flange 141 by rotation, so as to drive the partition flange 141 to stretch and retract to communicate the gas outlet passage 42 and the gas inlet passage 41.

To achieve the sealing effect between the spray gun main body 40 and the mounting base 190 and the ejector pin 180, as shown in Fig. 3, a mounting chamber is provided on the mount base 190, a second sealing ring 191 is provided in the mounting chamber, and the mounting base 190 is in sealed connection with the spray gun main body 40 through the second sealing ring 191.

In some embodiments, the spray gun further includes a pressing block 192. The pressing block 192 is provided in the mounting chamber and pressed on the second sealing ring 191. In this way, the sealing effect is enhanced.

In some embodiments, an ejector block 193 is provided on one end, far away from the partition flange 141, of the ejector pin 180. By setting the ejector block 193, the ejector pin 180 is operated conveniently.

Some embodiments of the disclosure also provide a car washer, which includes a steam generator and the spray gun abovementioned, wherein the spray gun is connected with the steam generator.

It can be seen from above description that the above embodiments of the disclosure achieve the following technical effects.

The spray gun in some embodiments of the disclosure includes the gas inlet pipe 110, the gas outlet pipe 120, and the spray gun main body 40. Both the gas inlet pipe 110 and the gas outlet pipe 120 are mounted on the spray gun main body 40. The gas inlet passage 41 used for being in communication with the pipe cavity of the gas inlet pipe 110 and the gas outlet passage 42 used for being in communication with the pipe cavity of the gas outlet pipe 120 are provided on the spray gun main body 40. The spray gun further includes the sealing assembly. At least a part of the sealing assembly is movably provided between the gas inlet passage 41 and the gas outlet passage 42, so as to cut off the gas inlet passage 41 and the gas outlet passage 42, or communicate the gas inlet passage 41 and the gas outlet passage 42. To communicate or uncommunicate the gas inlet passage 41 and the gas outlet passage 42, the sealing assembly includes the partition flange 141 for cutting off the gas inlet passage 41 and the gas outlet passage 42 and the elastic member 150 connected with the partition flange 141. By providing the elastic member 150 in a retractable way, the partition flange 141 is pressed, under the action of the elastic member 150, at the position that cuts off the gas inlet passage 41 and the gas outlet passage 42, thereby cutting off the gas inlet passage 41 and the gas outlet passage 42; and only when acted upon by an external force, the partition flange 141 overcomes the action of the elastic member 150 to turn on the gas inlet passage 41 and the gas outlet passage 42; in this way, the sealing effect of the spray gun main body 40 is enhanced, and the problem that the sealing effect between the gas outlet pipe and the gas inlet pipe of the spray gun of the car washer known to inventors cannot be ensured is solved.

## Claims

1. A spray gun, comprising: a spray gun housing (10) and an operating handle (20), the operating handle (20) being provided on the spray gun housing (10) to control connection and disconnection of a fluid in the spray gun by pulling the operating handle (20); wherein the spray gun further comprises:
a spray gun main body (40);
a sealing assembly (50), at least a part of the sealing assembly (50) being movably provided in the spray gun main body (40) of the spray gun to control the connection and disconnection of a fluid in the spray gun main body (40), and the operating handle (20) being connected with the sealing assembly (50), so as to drive the sealing assembly (50) to move by pulling the operating handle (20), so that the connection and disconnection of the fluid in the spray gun main body is controlled; and
a locking switch (30), mounted on the spray gun housing (10) in a position-adjustable manner, the locking switch (30) being located on one side of the operating handle (20) and cooperating with the operating handle (20) in a limiting manner, so as to prevent the operating handle (20) from being pulled when the spray gun is in a non-operating state;
wherein the sealing assembly (50) comprises a partition flange (141) used for cutting off a fluid passage in the spray gun main body (40) and an elastic member (150) connected with the partition flange (141); and the elastic member (150) is provided in a retractable way to press the partition flange (141) to a position that cuts off the fluid passage of the spray gun main body (40);
**characterized in that**: wherein the locking switch (30) is provided with a locking portion (31); the locking switch (30) is movably provided along a direction close to or away from the operating handle (20), so that the locking portion (31) is abutted against the operating handle (20), or the locking portion (31) avoids the operating handle (20) to make the operating handle (20) move;
wherein the locking switch (30) is provided with a locking position used for limiting the operating handle (20) and an avoiding position used for avoiding the operating handle (20); the locking switch (30) is movably provided between the locking position and the avoiding position; the spray gun further comprises a cushion block (70), the cushion block (70) being mounted on the spray gun housing (10); when the locking switching (30) is located at the locking position, the cushion block (70) is located on a side, far away from the operating handle (20), of the locking portion (31) and is abutted against the locking portion (31), so as to lock the locking switch (30) at the locking position.

2. The spray gun as claimed in claim 1, further comprising:
a connecting rod (60), one end of the connecting rod (60) being connected with the sealing assembly (50), and the other end of the connecting rod (60) being connected with the operating handle (20), so that the operating handle (20) drives, through the connecting rod (60), the sealing assembly (50) to move.

3. The spray gun as claimed in claim 1, further comprising: a gas inlet pipe (110) and a gas outlet pipe (120); both the gas inlet pipe (110) and the gas outlet pipe (120) are mounted on the spray gun main body (40); a gas inlet passage (41) used for being in communication with a pipe cavity of the gas inlet pipe (110) and a gas outlet passage (42) used for being in communication with a pipe cavity of the gas outlet pipe (120) are provided on the spray gun main body (40); wherein, at least a part of the sealing assembly is movably provided between the gas inlet passage (41) and the gas outlet passage (42), so as to cut off the gas inlet passage (41) and the gas outlet passage (42), or communicate the gas inlet passage (41) and the gas outlet passage (42).

4. The spray gun as claimed in claim 3, wherein a partition passage (43) is provided on the spray gun main body (40); the partition passage (43) is located between the gas inlet passage (41) and the gas outlet passage (42); the partition passage (43) is in communication with both the gas inlet passage (41) and the gas outlet passage (42); the partition flange (141) is provided in the partition passage (43) in a position-adjustable manner, so as to cut off the gas inlet passage (41) and the gas outlet passage (42).

5. The spray gun as claimed in claim 4, wherein the partition passage (43) is a stepped hole comprising a first hole section (431) and a second hole section (432); the first hole section (431) is in communication with the gas outlet passage (42); the second hole section (432) is in communication with the gas inlet passage (41); and the partition passage (43) is occluded at a joint between the first hole section (431) and the second hole section (432).

6. The spray gun as claimed in claim 1, wherein the sealing assembly further comprises a sealing base (160); one end of the elastic member (150) is abutted against the sealing base (160), and the other end of the elastic member (150) is abutted against the partition flange (141).

7. The spray gun as claimed in claim 1, further comprising: an ejector pin (180); the ejector pin (180) is connected with the partition flange (141), so that the partition flange (141) is pushed to move through the ejector pin (180).

8. A car washer, comprising a steam generator and the spray gun as claimed in any one of claims 1 to 7, wherein the spray gun is connected with the steam generator.

## Patentansprüche

1. Spritzpistole, umfassend: ein Spritzpistolengehäuse (10) und einen Betätigungsgriff (20), wobei der Betätigungsgriff (20) am Spritzpistolengehäuse (10) vorgesehen ist, um das Verbinden und Trennen einer Flüssigkeit in der Spritzpistole durch Ziehen des Betätigungsgriffs (20) zu steuern; wobei die Spritzpistole weiterhin Folgendes umfasst:
ein Spritzpistolen-Hauptgehäuse (40);
eine Dichtungsanordnung (50), wobei mindestens ein Teil der Dichtungsanordnung (50) beweglich im Spritzpistolen-Hauptgehäuse (40) der Spritzpistole vorgesehen ist, um die Verbindung und Trennung einer Flüssigkeit im Spritzpistolen-Hauptgehäuse (40) zu steuern, und der Betätigungsgriff (20) mit der Dichtungsanordnung (50) verbunden ist, um die Dichtungsanordnung (50) durch Ziehen des Betätigungsgriffs (20) in Bewegung zu setzen, sodass die Verbindung und Trennung der Flüssigkeit im Spritzpistolen-Hauptgehäuse gesteuert wird; und
einen Verriegelungsschalter (30), der am Spritzpistolengehäuse (10) lageverstellbar angebracht ist, wobei der Verriegelungsschalter (30) auf einer Seite des Betätigungsgriffs (20) angeordnet ist und mit dem Betätigungsgriff (20) begrenzend zusammenwirkt, um ein Ziehen des Betätigungsgriffs (20) im Ruhezustand der Spritzpistole zu verhindern;
wobei die Dichtungsanordnung (50) einen Trennflansch (141), der zum Absperren eines Flüssigkeitsdurchgangs im Spritzpistolen-Hauptgehäuse (40) verwendet wird, und ein elastisches Element (150) umfasst, das mit dem Trennflansch (141) verbunden ist; und das elastische Element (150) auf eine zurückziehbare Weise vorgesehen ist, um den Trennflansch (141) in eine Position zu drücken, die den Flüssigkeitsdurchgang des Spritzpistolen-Hauptgehäuses (40) abschneidet;
**dadurch gekennzeichnet, dass**: wobei der Verriegelungsschalter (30) mit einem Verriegelungsabschnitt (31) versehen ist; der Verriegelungsschalter (30) beweglich entlang einer Richtung in die Nähe des Betätigungsgriffs (20) oder von diesem weg vorgesehen ist, sodass der Verriegelungsabschnitt (31) am Betätigungsgriff (20) anliegt oder der Verriegelungsabschnitt (31) dem Betätigungsgriff (20) ausweicht, um den Betätigungsgriff (20) zu bewegen;
wobei der Verriegelungsschalter (30) mit einer Verriegelungsposition, die zum Begrenzen des Betätigungsgriffs (20) verwendet wird, und einer Ausweichposition, die zum Ausweichen des Betätigungsgriffs (20) verwendet wird, versehen ist; der Verriegelungsschalter (30) zwischen der Verriegelungsposition und der Ausweichposition beweglich vorgesehen ist; die Spritzpistole weiterhin einen Polsterblock (70) umfasst, wobei der Polsterblock (70) am Spritzpistolengehäuse (10) montiert ist; wobei, wenn sich der Verriegelungsschalter (30) in der Verriegelungsposition befindet, sich der Polsterblock (70) auf einer vom Betätigungsgriff (20) entfernten Seite des Verriegelungsabschnitts (31) befindet und am Verriegelungsabschnitt (31) anliegt, um den Verriegelungsschalter (30) in der Verriegelungsposition zu verriegeln.

2. Spritzpistole nach Anspruch 1, weiterhin umfassend:
eine Verbindungsstange (60), wobei ein Ende der Verbindungsstange (60) mit der Dichtungsanordnung (50) verbunden ist und das andere Ende der Verbindungsstange (60) mit dem Betätigungsgriff (20) verbunden ist, sodass der Betätigungsgriff (20) über die Verbindungsstange (60) die Dichtungsanordnung (50) zum Bewegen antreibt.

3. Spritzpistole nach Anspruch 1, weiterhin umfassend: eine Gaseinlassleitung (110) und eine Gasauslassleitung (120); wobei sowohl die Gaseinlassleitung (110) als auch die Gasauslassleitung (120) am Spritzpistolen-Hauptgehäuse (40) montiert sind; wobei am Spritzpistolen-Hauptgehäuse (40) der Spritzpistole ein Gaseinlasskanal (41), der dazu dient, mit einem Leitungshohlraum der Gaseinlassleitung (110) in Verbindung zu stehen, und ein Gasauslasskanal (42), der dazu dient, mit einem Leitungshohlraum der Gasauslassleitung (120) in Verbindung zu stehen, vorgesehen sind; wobei mindestens ein Teil der Dichtungsanordnung beweglich zwischen dem Gaseinlasskanal (41) und dem Gasauslasskanal (42) vorgesehen ist, um den Gaseinlasskanal (41) und den Gasauslasskanal (42) abzuschneiden oder den Gaseinlasskanal (41) und den Gasauslasskanal (42) miteinander zu verbinden.

4. Spritzpistole nach Anspruch 3, wobei am Spritzpistolen-Hauptgehäuse (40) ein Trennkanal (43) vorgesehen ist; wobei der Trennkanal (43) zwischen dem Gaseinlasskanal (41) und dem Gasauslasskanal (42) liegt; wobei der Trennkanal (43) sowohl mit dem Gaseinlasskanal (41) als auch mit dem Gasauslasskanal (42) in Verbindung steht; wobei der Trennflansch (141) im Trennkanal (43) lageverstellbar vorgesehen ist, um den Gaseinlasskanal (41) und den Gasauslasskanal (42) abzuschneiden.

5. Spritzpistole nach Anspruch 4, wobei der Trennkanal (43) ein abgestuftes Loch ist, das einen ersten Lochabschnitt (431) und einen zweiten Lochabschnitt (432) umfasst; wobei der erste Lochabschnitt (431) in Verbindung mit dem Gasauslasskanal (42) steht; der zweite Lochabschnitt (432) in Verbindung mit dem Gaseinlasskanal (41) steht; und der Trennkanal (43) an einer Verbindungsstelle zwischen dem ersten Lochabschnitt (431) und dem zweiten Lochabschnitt (432) verschlossen ist.

6. Spritzpistole nach Anspruch 1, wobei die Dichtungsanordnung außerdem eine Dichtungsbasis (160) umfasst; wobei ein Ende des elastischen Elements (150) an der Dichtungsbasis (160) anliegt, und das andere Ende des elastischen Elements (150) am Trennflansch (141) anliegt.

7. Spritzpistole nach Anspruch 1, weiterhin umfassend: einen Auswerferstift (180); wobei der Auswerferstift (180) mit dem Trennflansch (141) verbunden ist, sodass der Trennflansch (141) zur Bewegung durch den Auswerferstift (180) gedrückt wird.

8. Autowaschanlage, bestehend aus einem Dampfgenerator und der Spritzpistole nach einem der Ansprüche 1 bis 7, wobei die Spritzpistole mit dem Dampfgenerator verbunden ist.

## Revendications

1. Pistolet de pulvérisation, comprenant : un boîtier de pistolet de pulvérisation (10) et une manette (20), la manette (20) étant disposée sur le boîtier de pistolet de pulvérisation (10) pour commander la circulation et le blocage d'un fluide dans le pistolet de pulvérisation par traction de la manette (20) ; le pistolet de pulvérisation comprenant en outre :
un corps principal de pistolet de pulvérisation (40) ;
un ensemble d'obturation (50), au moins une partie de l'ensemble d'obturation (50) étant disposée de façon mobile dans le corps principal de pistolet de pulvérisation (40) du pistolet de pulvérisation pour commander la circulation et le blocage d'un fluide dans le corps principal de pistolet de pulvérisation (40), et la manette (20) étant reliée à l'ensemble d'obturation (50), de façon à forcer l'ensemble d'obturation (50) à se déplacer par traction de la manette (20), de telle sorte que la circulation et le blocage du fluide dans le corps principal de pistolet de pulvérisation soient commandés ; et
un curseur de verrouillage (30), monté sur le boîtier de pistolet de pulvérisation (10) d'une manière réglable en position, le curseur de verrouillage (30) étant situé d'un côté de la manette (20) et coopérant avec la manette (20) d'une manière limitante, de façon à empêcher la manette (20) d'être tirée lorsque le pistolet de pulvérisation est dans un état inactif ;
dans lequel l'ensemble d'obturation (50) comprend un collet de séparation (141) utilisé pour boucher un passage de fluide dans le corps principal de pistolet de pulvérisation (40) et un organe élastique (150) relié au collet de séparation (141) ; et l'organe élastique (150) est disposé d'une façon rétractable pour presser le collet de séparation (141) vers une position qui bouche le passage de fluide du corps principal de pistolet de pulvérisation (40) ;
**caractérisé en ce que** : dans lequel le curseur de verrouillage (30) est pourvu d'une portion de verrouillage (31) ; le curseur de verrouillage (30) est disposé de façon mobile le long d'une direction de rapprochement ou d'éloignement par rapport à la manette (20), de telle sorte que la portion de verrouillage (31) soit en appui contre la manette (20), ou que la portion de verrouillage (31) évite la manette (20) pour laisser la manette (20) se déplacer ;
dans lequel le curseur de verrouillage (30) est pourvu d'une position de verrouillage utilisée pour limiter la manette (20) et d'une position d'évitement utilisée pour éviter la manette (20) ; le curseur de verrouillage (30) est disposé de façon mobile entre la position de verrouillage et la position d'évitement ; le pistolet de pulvérisation comprend en outre un bloc d'amortissement (70), le bloc d'amortissement (70) étant monté sur le boîtier de pistolet de pulvérisation (10) ; lorsque le curseur de verrouillage (30) est situé à la position de verrouillage, le bloc d'amortissement (70) est situé d'un côté, éloigné de la manette (20), de la portion de verrouillage (31) et est en appui contre la portion de verrouillage (31), de façon à verrouiller le curseur de verrouillage (30) à la position de verrouillage.

2. Pistolet de pulvérisation selon la revendication 1, comprenant en outre :
une tige de liaison (60), une extrémité de la tige de liaison (60) étant reliée à l'ensemble d'obturation (50), et l'autre extrémité de la tige de liaison (60) étant reliée à la manette (20), de telle sorte que la manette (20) force, par l'intermédiaire de la tige de liaison (60), l'ensemble d'obturation (50) à se déplacer.

3. Pistolet de pulvérisation selon la revendication 1, comprenant en outre : un tuyau d'entrée de gaz (110) et un tuyau de sortie de gaz (120) ; le tuyau d'entrée de gaz (110) et le tuyau de sortie de gaz (120) sont tous les deux montés sur le corps principal de pistolet de pulvérisation (40) ; un passage d'entrée de gaz (41) utilisé pour être en communication avec une cavité de tuyau du tuyau d'entrée de gaz (110) et un passage de sortie de gaz (42) utilisé pour être en communication avec une cavité de tuyau du tuyau de sortie de gaz (120) sont ménagés sur le corps principal de pistolet de pulvérisation (40) ; dans lequel au moins une partie de l'ensemble d'obturation est disposée de façon mobile entre le passage d'entrée de gaz (41) et le passage de sortie de gaz (42), de façon à boucher le passage d'entrée de gaz (41) et le passage de sortie de gaz (42), ou à faire communiquer le passage d'entrée de gaz (41) et le passage de sortie de gaz (42).

4. Pistolet de pulvérisation selon la revendication 3, dans lequel un passage de séparation (43) est ménagé sur le corps principal de pistolet de pulvérisation (40) ; le passage de séparation (43) est situé entre le passage d'entrée de gaz (41) et le passage de sortie de gaz (42) ; le passage de séparation (43) est en communication aussi bien avec le passage d'entrée de gaz (41) qu'avec le passage de sortie de gaz (42) ; le collet de séparation (141) est disposé dans le passage de séparation (43) d'une manière réglable en position, de façon à boucher le passage d'entrée de gaz (41) et le passage de sortie de gaz (42).

5. Pistolet de pulvérisation selon la revendication 4, dans lequel le passage de séparation (43) est un trou étagé comprenant un premier segment de trou (431) et un second segment de trou (432) ; le premier segment de trou (431) est en communication avec le passage de sortie de gaz (42) ; le second segment de trou (432) est en communication avec le passage d'entrée de gaz (41) ; et le passage de séparation (43) est fermé au niveau d'une jonction entre le premier segment de trou (431) et le second segment de trou (432).

6. Pistolet de pulvérisation selon la revendication 1, dans lequel l'ensemble d'obturation comprend en outre une base d'obturation (160) ; une extrémité de l'organe élastique (150) est en appui contre la base d'obturation (160), et l'autre extrémité de l'organe élastique (150) est en appui contre le collet de séparation (141).

7. Pistolet de pulvérisation selon la revendication 1, comprenant en outre une broche d'éjecteur (180) ; la broche d'éjecteur (180) est reliée au collet de séparation (141), de sorte que le collet de séparation (141) est poussé à se déplacer par l'intermédiaire de la broche d'éjecteur (180).

8. Poste de lavage de voitures, comprenant un générateur de vapeur et le pistolet de pulvérisation selon n'importe laquelle des revendications 1 à 7, le pistolet de pulvérisation étant raccordé au générateur de vapeur.
